# EUROPEAN PATENT APPLICATION

(11) **EP 4 767 828 A1**
(43) Date of publication of application: **01.07.2026**
(21) Application number: 25227443.6
(22) Date of filing: 29.12.2025
(51) Int. Cl.: A23F 3/00, A23F 3/16, A23L 2/38

(54) **TEA-BASED BEVERAGE**

(30) Priority: 30.12.2024 EP 24223794
(71) Applicant: Tetra Laval Holdings & Finance S.A., 1009 Pully (CH)
(72) Inventor: KIMMING, Magnus, 221 86 Lund (SE)
(74) Representative: Tetra Pak Patent Attorneys

(57) **Abstract**

The present disclosure relates to a method (400) for producing a tea-based beverage precursor (208). The method comprises obtaining (402) brew spent tea leaves (BSTL) (201) from a tea extraction system (102) used in the production of tea. These BSTL (201) are then subjected to a wet grinding process (404) to form a BSTL slurry (704). Subsequently, the BSTL slurry (704) is processed (406) using enzymatic treatment to convert it into the tea-based beverage precursor (208). Related products, processes and processing lines are also disclosed.

## Description

### Technical Field

The disclosed technology relates to plant-based beverages. More particularly, it is concerned with a method for producing a tea-based beverage precursor and a method for producing a tea-based beverage using this precursor.

### Background

The interest in plant-based beverages has expanded significantly due to increasing consumer awareness of health, sustainability, and dietary preferences such as veganism, lactose intolerance, and environmental concerns. Consumers are increasingly seeking products that are free from animal-based ingredients, cholesterol, and artificial additives, which has driven the development of alternatives like soy and almond milk.

In recent years, the market has broadened to include beverages derived from oats, rice, hemp, coconut, peas, and cashews, each offering unique flavors, textures, and nutritional profiles. Many of these beverages are fortified with essential nutrients such as calcium, vitamin D, and vitamin B12, matching or exceeding the nutritional value of traditional dairy. Additionally, some are enhanced with protein to cater to health-conscious consumers.

Despite the availability of several plant-based beverage options, there remains a need for more nutritious and environmentally friendly alternatives. The disclosed methods leverage brew spent tea leaves (BSTL), a byproduct of tea production, to create innovative tea-based beverages, addressing both the demand for novel plant-based drinks and the need for more sustainable production practices.

### Summary

It is an object of the invention to at least partly overcome one or more of the above-identified limitations of the prior art. In particular, it is an object to provide a plant-based beverage based on a base material being a byproduct from existing food production lines. Put differently, it is an object to further improve both cost efficiency and reduce the environmental impact for existing beverage production lines.

According to a first aspect it is provided a method for producing a tea-based beverage precursor, said method may comprise obtaining brew spent tea leaves (BSTL) from a tea extraction system used for tea production, grinding the BSTL into a BSTL slurry, and processing the BSTL slurry into the tea-based beverage precursor by using enzymatic treatment.

An advantage with using the BSTL is that this contains proteins that can be used for another food product instead of being wasted. By doing so, the overall cost efficiency of the food production will be improved and the environmental impact is lowered.

In this context, a "precursor" may refer to an intermediate product that is derived from processing BSTL and is subsequently used as a foundational ingredient or base for producing a tea-based beverage. The precursor may undergo specific preparation steps, such as grinding and enzymatic treatment, to achieve a form that makes it suitable for further processing into the final tea-based beverage.

The BSTL may have a total solid content of 10-30 wt%. The remaining wt% is typically water. The BSTL may have a total liquid content of 70-90 wt%. The liquid may be primarily water.

As used herein, "wet grinding" refers to the BSTL comprising at least 70 wt% water when wet grinded. Water may be added to the BSTL, such that the BSTL comprising at least 70 wt%, or as much as at least 85 wt% water, when wet grinded.

The enzymatic treatment may comprise adding one or more carbohydrases and/or one or more proteases.

The step of processing the BSTL slurry by using the enzymatic treatment may comprise reducing a temperature of the BSTL slurry to below 70 °C, performing the enzymatic treatment for a period of time spanning from 60 to 100 minutes, and increasing the temperature of the BSTL slurry to above 80 °C such that the enzymatic treatment is stopped.

The method may further comprise removing fibers from the BSTL slurry to form a fiber free BSTL slurry. As used herein, "fiber free" does not mean that the slurry is completely devoid of fibers. Rather, it means that fiber separation has been conducted, removing at least 50% of the fibers, and in a preferred embodiment in means removing at least 80% of the fibers.

The fiber free BSTL may have a total solids content in the range of 2 to 4% and a protein content in the range 0.5 to 1.4%, wherein the BSTL slurry without the fibers is processed into the tea-based beverage precursor.

As used herein, "total solids content" may refer to the percentage by weight of all solid materials present in the BSTL slurry after the fibers have been removed. This measurement includes all remaining non-liquid components such as dissolved and suspended organic and inorganic matter, including proteins, carbohydrates, and minerals, which contribute to the composition of the slurry.

As used herein, "fiber free" may refer to at least 70% of the fibers being removed from the slurry, or even as much as 80% or 90% of the fibers being removed from the slurry.

According to a second aspect it is provided a tea-based beverage precursor produced according to the method according to the first aspect.

An advantage with having the precursor produced in accordance with the first aspect is that this precursor may be stored for a period of time until there is enough base material for starting tea-based beverage production. During storing, the precursor may also be transported to another site, which provides flexibility and may provide for more efficient plant usage.

According to a third aspect it is provided a method for producing a tea-based beverage based on a tea-based beverage precursor, said method may comprise receiving the tea-based beverage precursor produced according to the first aspect, mixing the tea-based beverage precursor with other ingredients into a BSTL-based mixture, and heat treating the BSTL-based mixture such that the tea-based beverage is formed.

An advantage of using the precursor as base material is that the process for producing the tea-based beverage may comprise a relatively few pieces of equipment, which improves both cost efficiency and also lower the hurdle for building such processing line. In addition, adding the other ingredients relatively late in the process provides for that ingredients, such as vitamins, that are relatively expensive and that may also be consumed during the course of processing, can be added in a cost efficient manner.

The other ingredients may comprise sugar, minerals, vitamins, salt, vegetable oils, aroma and/or water.

According to a fourth aspect it is provided a tea-based beverage produced according to the third aspect.

According to a fifth aspect it is provided a method of combined production of tea and a tea-based beverage, said method may comprise producing the tea by extracting tea extract from the tea leaves using a tea extraction system, mixing the tea extract with water into a tea mixture, processing the tea mixture into the tea, and outputting brew spent tea leaves (BSLT) from the tea extraction system, producing the tea-based beverage by producing a tea-based beverage precursor according to the first aspect, and producing the tea-based beverage based on the tea-based beverage precursor according to the third aspect.

The method may further comprise obtaining tea cream, discharged from tea production, wherein, in the step of producing the tea-based beverage, the tea cream is mixed with other ingredients and the tea-based beverage precursor.

The method may further comprise, subsequent to the step of producing the tea-based beverage precursor and prior to the step of producing the tea-based beverage based on the tea-based beverage precursor, storing, during a storage time period, the tea-based beverage precursor for subsequent use as a base material for production of the tea-based beverage, wherein the storage time period exceeds 2 hours.

During the step of storing, the tea-based beverage precursor may be transported from an production site in which a processing line for producing the precursor is placed to a tea-based beverage production site in which a processing line for producing the tea-based beverage is placed.

According to a sixth aspect it is provided a processing line for producing a tea-based beverage precursor, said processing line may comprise a grinder for transforming brew spent tea leaves (BSTL), obtained from a tea extraction system used for tea production, into a BSTL slurry, and an enzymatic treatment station arranged for processing the BSTL slurry into the tea-based beverage precursor.

According to a seventh aspect it is provided a processing line for producing a tea-based beverage based on a tea-based beverage precursor, said processing line may comprise a mixer arranged for mixing the tea-based beverage precursor with other ingredients, such as water and sugar, into a BSTL-based mixture, and a heat treatment station arranged to heat treat the BSTL-based mixture such that the tea-based beverage is formed.

The different features and advantages described above with reference to one of the aspects should not only be understood to be linked to this exclusively, but are also applicable for the other aspects.

Still other objectives, features, aspects and advantages of the invention will appear from the following detailed description as well as from the drawings.

### Drawings

Embodiments of the invention will now be described, by way of example, with reference to the accompanying schematic drawings, in which:
Fig. 1 illustrates a system for producing a tea-based beverage.
Fig. 2 shows another example of a system for producing the tea-based beverage.
Fig. 3 depicts a flowchart illustrating a method for producing the tea-based beverage.
Fig. 4 presents a flowchart illustrating a method for producing a tea-based beverage precursor.
Fig. 5 displays a flowchart illustrating a method for producing the tea-based beverage based on the precursor.
Fig. 6 demonstrates a flowchart illustrating a method for combined production of tea and the tea-based beverage.
Fig. 7 provides a general illustration of a combined production line that includes processing lines for producing the tea-based beverage precursor and the tea-based beverage based on the precursor.

### Description

In tea production, tea leaves are added into a tea extraction system and during a tea extraction process, performed in the tea extraction system, these leaves are held in hot water for a period of time such that tea is formed. This tea may thereafter by processed in different steps, for instance, by having sugar added, such that ready-to-dring (RTD) tea is formed. Once the tea extraction process is performed, the remaining tea leaves, that have been held in the hot water, are discharged, i.e. handled as waste. What has been overlooked until today is that since these leaves, also referred to as brew spent tea leaves (BSTL), contain protein and other nutrients, it is possible to use this byproduct for producing another type of beverage and thereby further improve cost efficiency and also reduce an overall environmental impact.

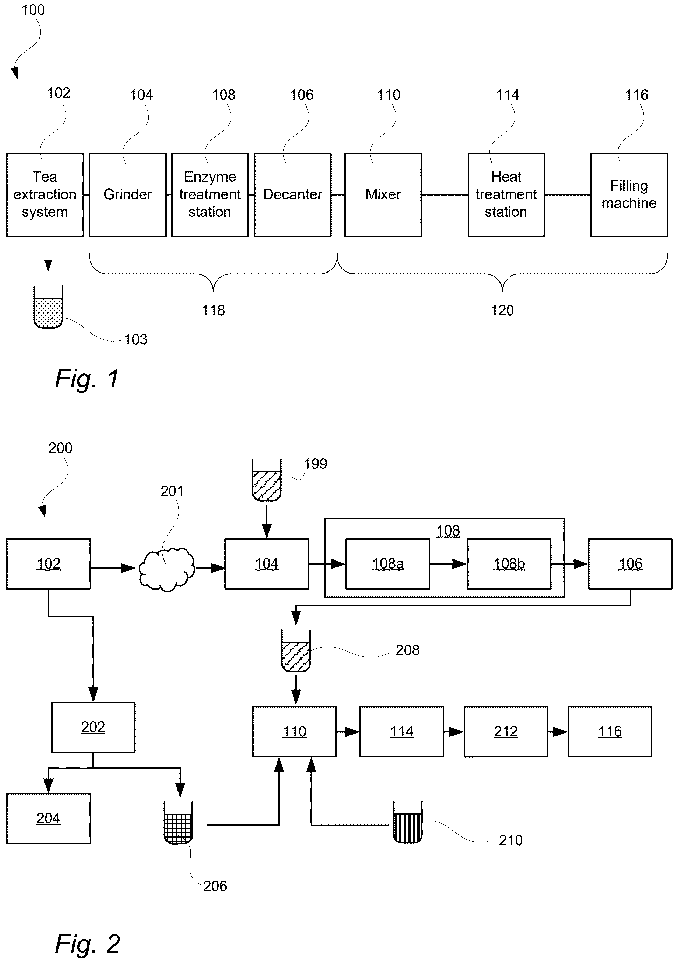

Fig. 1 illustrates by way of example a system 100 for producing a tea-based beverage based on the BSTL from a tea extraction system 102 of a tea processing line arranged to produce tea 103. Once having received the BSTL, this can be grinded by using a grinder 104 such that a BSTL slurry is formed. Next, optionally, the BSTL slurry can be fed into an enzyme treatment station 108 in which on one more enzymes, such as carbohydrases and/or proteases, is added to provide for that the BSTL is subjected to enzymatic treatment. Some specific examples of enzymes includes the enzyme sold under the names Ultraflo XL, Celluclast 1.5 L, Formea, and Viscozyme L. The enzyme treatment station 108 can also perform enzyme deactivation. Next, a decanter 106 is used to remove fibers from the BSTL, such that the liquid phase coming out from the decanter 106 forms a tea-based beverage precursor, also herein in short referred to as precursor. The fibrous parts of the BSTL comes out from the decanter 106 as the solid phase (even though is has a fraction liquid content, as is common when performing decanting).

The precursor may be used directly for producing the tea-based beverage, but it is also possible to store the precursor for a period of time until this is used for producing the tea-based beverage. In case the precursor is stored carefully, e.g. a closed and temperature-controlled tank, this can at least be stored for hours. Having the possibility to store the precursor provides for that this can be transported to a different site. For instance, the tea production may take place on a site in which all equipment needed for producing the tea-based beverage is not available, and in such case, the precursor may be placed in a tank and transported to a different site having appropriate equipment.

When producing the tea-based beverage, other ingredients such as sugar, minerals, vitamins, salt, vegetable oils, and/or water may be mixed with the precursor. By way of example, a mixer 110, such as a high shear mixer, may be used for mixing the other ingredients with the precursor. The high shear mixer may include a rotor and a perforated stator, ensuring stabilizers are effectively mixed. The mixer 110 may receive the ingredients and the precursor in any suitable manner. This includes the possibility of feeding the other ingredients directly into the mixer 110. Once the precursor is mixed with the other ingredients, it can be heat treated in a heat treatment station 114, which may include a tubular heat exchanger, a plate heat exchanger, a steam injection device, or another suitable type of apparatus, resulting in the formation of the tea-based beverage. The tea-based beverage can thereafter be filled into packages using a filling machine 116. A processing line 118 for producing the precursor can comprise the grinder 104, the decanter 106 (if used), and the enzyme treatment station 108. A processing line 120 for producing the tea-based beverage can comprise the mixer 110 and the heat treatment station 114.

Fig. 2 illustrates another example of a system 200 for producing the tea-based beverage. In line with the example illustrated in Fig. 1, the tea extraction system 102 is used to extract aromas, etc., from the tea leaves and to feed this into a tea processing line 202 for producing the tea. As illustrated, the tea may thereafter be filled into packages using a tea filling machine 204. As a byproduct of the tea processing in the tea processing line 202, tea cream 206 can be output.

Brew spent tea leaves (BSTL) 201, that is, the tea leaves that have been used in the tea extraction system 102, can be discharged from the tea extraction system 102 and used as a base material for producing the tea-based beverage. In line with the example illustrated in Fig. 1, the BSTL may be ground by the grinder 104, such as a wet grinder. This may include adding water 199 so that the BSTL is wet ground. The water may be added to the BSTL prior to grinding, or as a step in the wet grinding process. Once a BSTL slurry has been formed in the grinder, the BSTL slurry may be fed into the enzyme treatment station 108. In the example illustrated in Fig. 2, this station is divided into two sub-stations: an enzyme treatment and storage station 108a, in which the temperature can be increased to activate the enzyme treatment, and an enzyme deactivation and cooling station 108b, in which the temperature is increased to deactivate the enzyme treatment. Downstream of the enzyme treatment station 108, the decanter 106 may be placed such that fibers can be removed. Thus, the decanter may be placed upstream of the enzyme treatment station, as illustrated in Fig. 1, or downstream as illustrated in Fig. 2.

Once the BSTL 201 has been ground, enzyme treated, and optionally processed by the decanter 106, the tea-based beverage precursor 208 is formed. This precursor 208 may be stored, e.g., in a closed and temperature-controlled tank, allowing precursors from several batches of tea production to be collected and processed at once. Furthermore, during storage, the precursor may be transported to a different site where the tea-based beverage is produced using the precursor as the base material.

When producing the tea-based beverage from the precursor, the precursor 208 can be fed into the mixer 110. The other ingredients 210, such as water and sugar, may also be fed into the mixer 110. To facilitate mixing, the other ingredients 210 may be processed in the mixer 110 before introducing the precursor 208. The mixer 110 may be a high shear mixer. In addition to the other ingredients 210, the tea cream 206, output from the tea processing line 202, may also be fed into the mixer 110. In doing so, two byproducts from tea production-the BSTL and the tea cream-can be used for food production instead of being wasted. Downstream of the mixer 110, the heat treatment station 114 may be arranged. Once the tea-based beverage has been formed, it may be stored in an aseptic storage 212 before being fed to the filling machine 116.

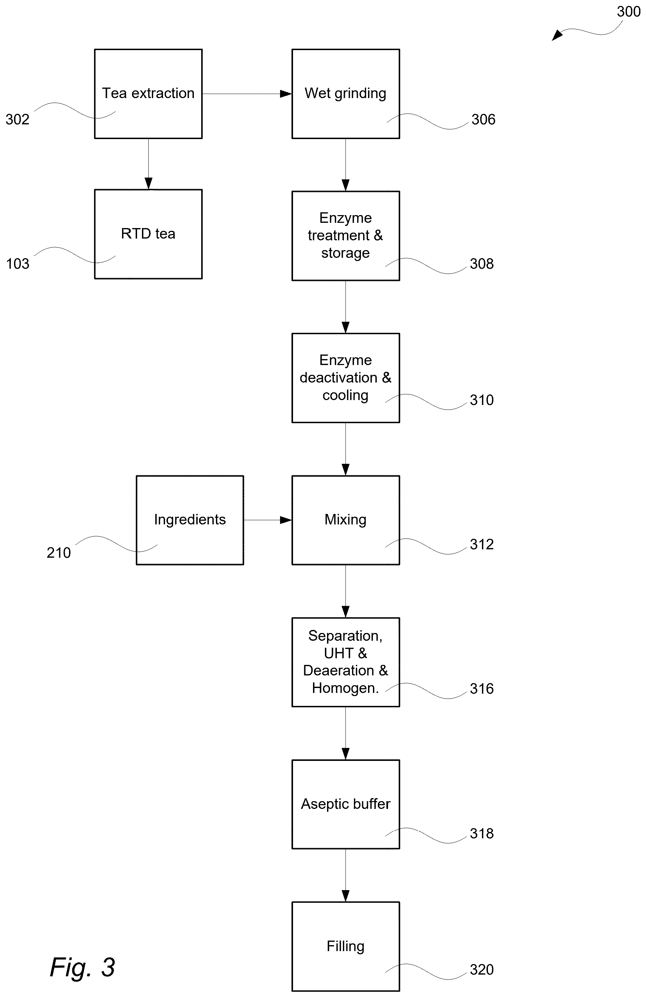

Fig. 3 is a flowchart illustrating, by way of example, a process 300 for producing the tea-based beverage. In line with the examples illustrated in Fig. 1 and 2, tea is extracted in a tea extraction step 302. After being processed, e.g., sweetened, the tea 103 is formed. The BSTL can be transferred from the tea extraction step 302 to a wet grinding step 306, which may include adding water to the BSTL.

Once ground, this may be exposed to enzyme treatment, which involves enzyme treatment and storage 308 and enzyme deactivation and cooling 310. Other ingredients, and possibly also the tea cream, may be mixed in a formulation and mixing step 312. Once mixed, the BSTL slurry may be subjected to fiber separation, heat treated, deaerated, and homogenized in a UHT, deaeration, and homogenization step 316. Once this step is completed, the tea-based beverage is formed. This may, in line with the example illustrated in Fig. 2, be stored in an aseptic buffer 318, and thereafter, a filling step 320, i.e., filling the tea-based beverage into packages, may be conducted.

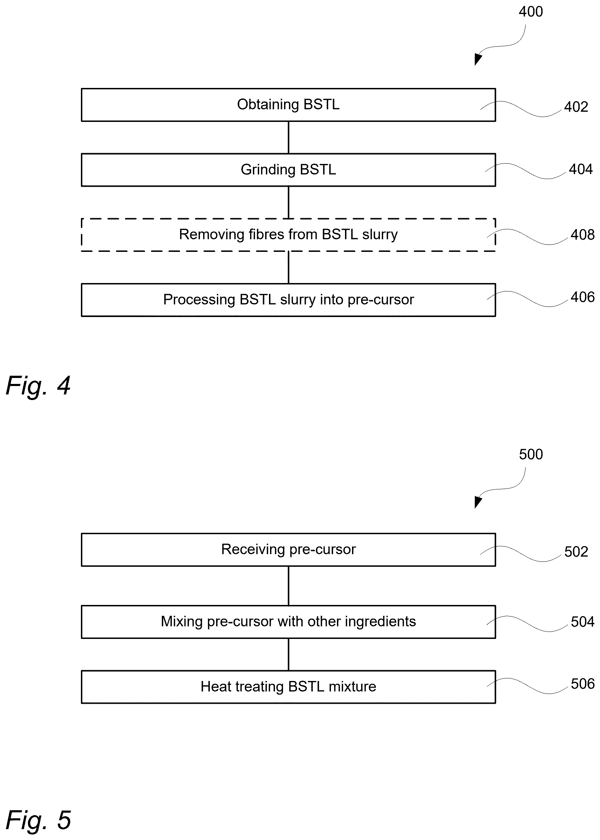

Fig. 4 is a flowchart illustrating a method 400 for producing the tea-based beverage precursor 208. The method comprises obtaining 402 the BSTL from the tea extraction system 102 used for tea production, grinding 404 the BSTL into a BSTL slurry, and processing 406 the BSTL slurry 704 into the tea-based beverage precursor 208 by using enzymatic treatment. The step of processing the BSTL slurry may be achieved by using the enzymatic treatment 308, 310 comprising reducing the temperature of the BSTL slurry to below 70 °C, e.g., 55 °C, performing the enzymatic treatment for a period of time spanning from 60 to 100 minutes, e.g., 75 minutes, and increasing the temperature of the BSTL slurry to above 80 °C, e.g., 90 °C, to stop the enzymatic treatment. The method may further comprise, prior to the step of processing 406 the BSTL slurry, removing 408 fibers from the BSTL slurry, e.g., by using the decanter, where the BSTL slurry without the fibers has a total solids (TS) content in the range of 2 to 4% and a protein content in the range of 0.5 to 1.4%. The fibers may have a total solids content in the range of 15 to 22% and a protein content in the range of 4 to 8%.

Fig. 5 is a flowchart illustrating a method 500 for producing the tea-based beverage based on the tea-based beverage precursor 208. As discussed above, this method may be performed at the same site as the method 400 illustrated in Fig. 4, or the precursor may be produced at one site and the tea-based beverage may be produced at another. The method may comprise receiving 502 the tea-based beverage precursor 208 produced according to the method illustrated in Fig. 4, mixing 504 the tea-based beverage precursor 208 with other ingredients into a BSTL-based mixture, and heat treating 506 the BSTL-based mixture such that the tea-based beverage is formed. The other ingredients may comprise sugar, minerals, vitamins, salt, vegetable oils, aroma, and/or water. To facilitate the mixing, the method may further comprise mixing the other ingredients 210 separately prior to the step of mixing 504 the tea-based beverage precursor 208 with the other ingredients.

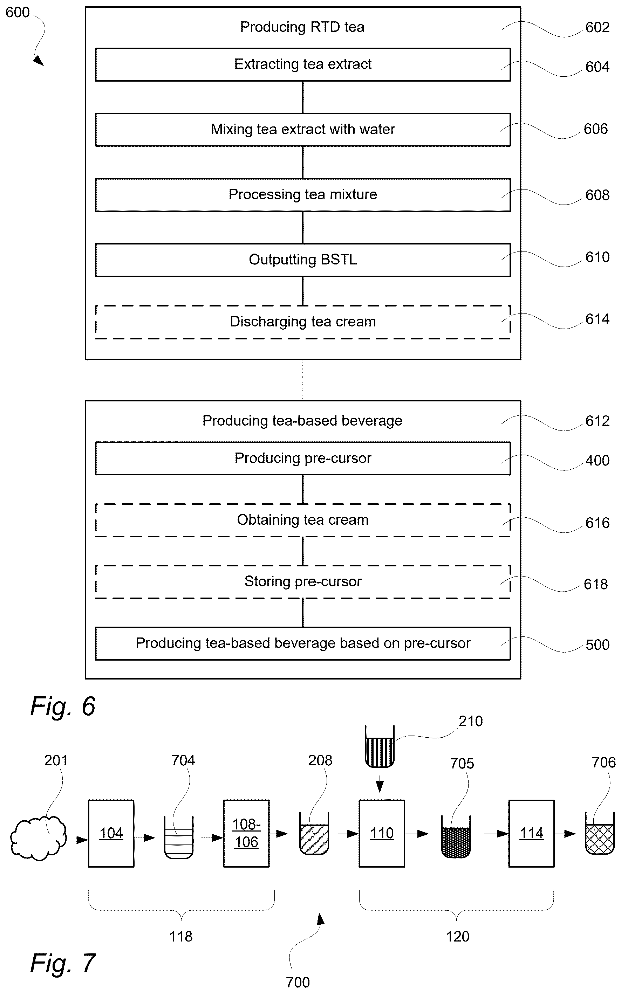

Fig. 6 is another flowchart illustrating a method of combined production of tea 103 and the tea-based beverage. The method may comprise producing 602 tea 103 by extracting 604 tea extract from the tea leaves using a tea extraction system 102, mixing 606 the tea extract with water to form a tea mixture, processing 608 the tea mixture into tea 103, and outputting 610 the BSTL from the tea extraction system 102. It also includes producing 612 the tea-based beverage by creating 400 the tea-based beverage precursor 208 as illustrated in Fig. 4, and producing 500 the tea-based beverage based on the tea-based beverage precursor 208 as shown in Fig. 5. The method may further comprise obtaining 616 tea cream 206, discharged from tea production, where, in the step of producing 612 the tea-based beverage, the tea cream is mixed with other ingredients and then combined with the tea-based beverage precursor 208. Additionally, subsequent to the step of producing 400 the tea-based beverage precursor 208 and prior to the step of producing 500 the tea-based beverage based on the tea-based beverage precursor 208, the method may include storing 618 the tea-based beverage precursor 208 during a storage time period, for subsequent use as a base material for the production of the tea-based beverage 706, where the storage time period may exceed 2 hours.

Fig. 7 is a general illustration of a combined production line 700 comprising the processing line 118 for producing the tea-based beverage precursor 208 and the processing line 120 for producing the tea-based beverage 706. The processing line 118 for producing the precursor may include the grinder 104 for transforming BSTL 201, obtained from the tea extraction system 102 used in tea production, into BSTL slurry 704, the enzymatic treatment station 108, and the decanter 106 arranged for processing the BSTL slurry 704 into the tea-based beverage precursor 208. The processing line 120 for producing the tea-based beverage 706 may include the mixer 110 arranged for mixing the tea-based beverage precursor 208 with other ingredients 708, such as water and sugar, into BSTL-based mixture 705, and the heat treatment station 114 arranged to heat treat the BSTL-based mixture 705 such that the tea-based beverage 706 is formed. Although not illustrated in Fig. 7, the mixer 110 may be used for mixing the other ingredients 210, and optionally the tea cream 206, before they are introduced into the mixer 110.

In the following experimental examples for producing a tea-based beverage precursor are described. The primary objective of the trials was to conduct five spent tea leaves extraction trials to evaluate the impact of various enzyme combinations on the quality of the extracted liquid, specifically assessing total solids and protein content.

Five trials were conducted. The first trial utilized the same enzyme combination previously tested. The second trial followed a recommendation from Novozymes. Trials three and four employed various configurations of Celluclast 1.5 L with and without additional enzymes. The fifth trial used no enzymes to establish a control baseline.

**Table 1. Overview of trials**

| Trial | Enzymes |
|---|---|
| 1 | Ultraflo XL, Celluclast 1.5 L, Formea Sol |
| 2 | Celluclast 1.5 L + Viscozyme L |
| 3 | Celluclast 1.5 L |
| 4 | Celluclast 1.5 L + Formea Sol |
| 5 | No enzymes |

The trials employed various equipment to ensure precise control and measurement, including a Vorwerk Thermomixer with a paddle agitator for brewing, sieves of sizes 2.5 mm, 0.5 mm, and 0.1 mm for separation, and an Eppendorf benchtop centrifuge equipped with 15 ml centrifuge tubes for sample analysis.

Each trial used the same brewing recipe, processing a batch of 2 kg of tea per trial to maintain consistency across the experiments.

**Table 2. Recipe for brewing tea**

| Ingredient | Amount (%) | Amount (g) |
|---|---|---|
| Sencha (tea leaves) | 4 | 80 |
| Distilled water | 96 | 1920 |
| Total | 100 | 2000 |

Five extraction trials with different enzyme combinations were performed to assess their impact on the extraction process. The table below details the enzyme combinations and dosages used in each trial. The first trial employed the same combination of enzymes that had previously been tested, while the second trial followed a recommendation from Novozymes. In the fifth trial, no enzymes were used to serve as a control. A dosage of 0.1% was applied for all recipes and enzymes.

**Table 3. Overview of enzyme combinations and dosages.**

| Trial | Ultraflo XL | Celluclast 1.5 L | Formea Sol | Viscozyme L |
|---|---|---|---|---|
| 1 | 0.1% | 0.1% | 0.1% | |
| 2 | | 0.1% | | 0.1% |
| 3 | | 0.1% | | |
| 4 | | 0.1% | 0.1% | |
| 5 | | | | |

The tea used in these trials was green broken tea leaves, specifically the product named "Pekoe ekologiskt te," sourced from the online store "Japan Sencha". The enzymes were supplied by Novozymes.

For tea brewing, distilled water was heated to 50°C in the Thermomixer. The tea leaves were added and brewed for 7 minutes and 30 seconds, with the paddle agitator set to the lowest speed setting ("spoon") throughout the brewing period. After brewing, the tea extract was separated from the leaves using a sieve tower with mesh sizes of 2.5 mm, 0.5 mm, and 0.1 mm.

The weight and volume of the tea leaves were recorded both before and after extraction. A 250 ml measuring cylinder was used to measure the dry volume of the tea leaves, while a 2 L beaker measured the volume of the wet or spent tea leaves. The total solids of the spent tea leaves were measured, and the pH, Brix, and total solids of the tea extract were also recorded.

For the extraction process, the spent tea leaves were returned to the Thermomixer and ground for 5 minutes at speed setting 5. An equal weight of water to the spent tea leaves was added to the mixer, followed by further grinding at speed setting 7 for 10 minutes (wet grinding). A sample was taken to measure pH, total solids, and particle size distribution of the resulting slurry.

The slurry was then heated to 55°C, and the enzymes Ultraflo XL, Celluclast 1.5 L, and Viscozyme L were added immediately. For trials that included Formea Sol, this enzyme was added after 30 minutes. The enzymation process lasted for a total of 90 minutes, after which the enzymes were deactivated by raising the temperature to 90-95°C for 15 minutes. This enzymation time was consistent across all trials, even when no enzymes were used.

Following enzyme deactivation, samples were taken to measure pH, total solids, and particle size distribution. An additional sample of the enzymated slurry was collected for protein analysis. The enzymated slurry was then divided into eight 15 ml centrifuge tubes and centrifuged at 4400 rpm for 10 minutes. The volumes of the liquid fraction and insoluble sludge fraction were recorded. The liquid fraction was separated, and total solids and pH were measured for both the liquid and sludge fractions. Samples of these fractions were also sent for protein analysis.

During the extraction process, the tea leaves absorbed water, increasing 4-5 times in dry weight and 3-3.6 times in dry volume. The sieves used to separate the tea leaves from the extract retained varying sizes of particles, with the content of the 2.5 mm sieve being used as the spent tea leaves for the trials. The resulting tea extract appeared green/yellow, turbid, and cloudy, with small visible particles.

The pH, Brix, and total solids of the tea extract, as well as the total solids of the spent tea leaves, are summarized in table 4 below:

**Table 4. Measurement data for tea extract and spent tea leaves.**

| Trial | pH | Brix (°Bx) | Total solids of extract (%) | Total solids of spent tea leaves (%) |
|---|---|---|---|---|
| 1 | 5.89 | 1.31 | 1.19 | 20.6 |
| 2 | 5.84 | 1.45 | 1.36 | 19.55 |
| 3 | 5.89 | 1.36 | 1.42 | 20.52 |
| 4 | 5.88 | 1.39 | 1.23 | 19.4 |
| 5 | 5.84 | 1.40 | 1.62 | 19.9 |

After enzymation, the slurry appeared very similar to its pre-enzymation state but was darker and browner in color. This observation was consistent across all trials except for trial 2, where the enzymated slurry was noticeably more liquid, less viscous, and less grainy compared to the others.

The particle size distribution analysis revealed a distinct difference in trial 2 compared to the other trials. Before enzymation, all slurries displayed a similar particle size distribution. However, after enzymation, the particle size distribution for trials 1, 3, 4, and 5 showed no significant changes. In contrast, trial 2 exhibited a skewed distribution toward smaller particle sizes, with an additional peak around 20 µm.

Following enzymation and enzyme deactivation, the slurry was centrifuged to separate the liquid and sludge fractions. The liquid fraction obtained was a watery, dark green liquid with an astringent and bitter taste. The appearance of the liquid and sludge fractions after separation is shown in the images below.

The volume fraction of sludge for each trial is presented in the table below. As shown, the sludge volume was generally high but significantly lower in trial 2. Additionally, the sludge from trial 2 appeared less wet compared to the sludge from the other trials.

**Table 5: Volume fraction sludge after centrifugation**

| Trial | Sludge Volume Fraction (%) |
|---|---|
| 1 | 56-61 |
| 2 | 28-31 |
| 3 | 61-67 |
| 4 | 55-59 |
| 5 | 55-58 |

The pH and total solids (TS) results for the slurry, enzymated slurry, and liquid and sludge fractions are summarized in table 6 below. Trial 2 demonstrated the highest TS in the liquid fraction, while trials 5 and 3 had the lowest. The enzymes used in trial 2 were Celluclast 1.5 L and Viscozyme L. Since Celluclast was also used in trials 2, 3, and 4, the observed differences in trial 2 can likely be attributed to the inclusion of Viscozyme L.

**Table 6: pH and total solids results for slurry, enzymated slurry, and liquid and sludge fractions**

| Trial | Slurry pH | Enzymated Slurry pH | Liquid Fraction pH | Slurry TS (%) | Enzymated Slurry TS (%) | Liquid Fraction TS (%) | Sludge Fraction TS (%) |
|---|---|---|---|---|---|---|---|
| 1 | 5.82 | 5.69 | 5.69 | 9.47 | 11.31 | 3.05 | 15.72 |
| 2 | 5.82 | 5.47 | 5.48 | 8.60 | 8.81 | 3.61 | 20.99 |
| 3 | 5.83 | 5.82 | 5.95 | 9.18 | 9.39 | 2.44 | 12.87 |
| 4 | 5.86 | 5.78 | 5.82 | 8.69 | 9.54 | 2.83 | 13.43 |
| 5 | 5.86 | 5.84 | 5.85 | 9.90 | 9.95 | 2.38 | 15.29 |

The invention provides a tea-based beverage precursor in which the fiber-free BSTL slurry has a total solids content of 2-4% and a protein content of 0.5-1.4%. Maintaining the slurry within these ranges delivers a combination of technical benefits. It ensures optimal viscosity for industrial processing, enabling efficient pumping and mixing without excessive energy consumption. It also provides stable dispersion during storage, reducing sedimentation and phase separation compared to slurries outside this range. Furthermore, it achieves a balanced nutritional profile, ensuring sufficient protein enrichment without compromising clarity or mouthfeel.

To evaluate the effect of fiber removal on composition and processing properties, four samples were prepared from slurry obtained in trial 2 by centrifugation at varying durations to achieve different levels of fiber separation. Longer centrifugation resulted in lower solids content, indicating greater fiber removal. Measured results are summarized in table 7, comparing: (i) a slurry below the inventive range, (ii) a slurry at the lower end of the inventive range, (iii) a slurry at the upper end of the inventive range, and (iv) a slurry above the inventive range.

Total solids and protein content were determined using standard gravimetric and Kjeldahl methods. Viscosity was measured at 20 °C using a rotational viscometer (expressed in centipoise, cP). Sedimentation after 24 hours and sensory clarity were assessed visually, where "sensory clarity" refers to the absence of visible particles and a clear appearance in the liquid phase.

**Table 7: Impact of composition on processing and quality**

| Sample | Total Solids (%) | Protein (%) | Viscosity (cPa at 20°C) | Sedimentation after 24h | Sensory Clarity |
|---|---|---|---|---|---|
| i | 1.2 | 0.2 | 40 | None | Excellent |
| ii | 2.1 | 0.5 | 70 | Low | Excellent |
| iii | 3.9 | 1.4 | 120 | Low | Acceptable |
| iv | 5.0 | 1.5 | 180 | Moderate | Insufficient |

The invention further improves resource efficiency and enhances flavor complexity and functional benefits by incorporating tea cream, a byproduct of tea production, into the tea-based beverage. Tea cream is relatively rich in polyphenols and caffeine, which significantly boost the antioxidant profile and sensory attributes of the final product. Controlled addition of tea cream allows adjustment of polyphenol and caffeine levels, creating a beverage with improved health benefits and a more complex flavor compared to standard ready-to-drink tea.

In the "with tea cream" sample, tea cream was added at 5% w/w of the total beverage formulation to sample iii described in connection with table 7. This level was selected as a practical balance between nutritional enhancement and processability. At this concentration, polyphenols increased from 180 mg/100 ml to 192 mg/100 ml, caffeine from 35 mg/100 ml to 36 mg/100 ml, and sensory evaluation improved from 6 to 8 on a 10-point hedonic scale. These results, summarized in table 8, confirm that tea cream addition delivers measurable improvements in antioxidant capacity and flavor.

**Table 8: Impact of tea cream addition**

| Parameter | Without tea cream | With tea cream (5% wt%) |
|---|---|---|
| Polyphenols (mg/100 ml) | 180 | 192 |
| Caffeine (mg/100 ml) | 35 | 36 |
| Sensory Score (1-10) | 6 | 6 |

The selected wt% of tea cream represents a practical compromise between functional benefits, product stability, and taste. Excessive addition can lead to turbidity and sedimentation, requiring complex stabilization measures, while very low levels provide negligible nutritional improvements. Thus, moderate incorporation of tea cream is preferred for achieving better antioxidant properties and flavor complexity without compromising clarity, process efficiency, or taste.

The slurry-based precursor already retains more tea leaf components than standard brewed tea, similar to Matcha, resulting in naturally higher polyphenol and caffeine levels. Enzymatic treatment further enhances the release of soluble compounds. Adding tea cream amplifies these effects, pushing the beverage toward the upper range of green tea profiles and closer to Matcha-like characteristics. While clarity challenges exist, they can be mitigated through homogenization or emulsification, making this approach highly attractive for functional tea beverages.

The tests described in connection with table 7 were based on trial 2, and the test described in connection with table 8 was performed for sample iii of table 7. Initial tests indicate similar patterns for other trials (1 and 3-5), also when these samples are mixed with tea cream.

From the description above, it follows that although various embodiments of the invention have been described and shown, the invention is not restricted thereto but may also be embodied in other ways within the scope of the subject matter defined in the following claims.

## Claims

1. A method (400) for producing a tea-based beverage precursor (208), the method comprising
obtaining (402) brew spent tea leaves (BSTL) (201) from a tea extraction system (102) used for tea production,
wet grinding (404) the BSTL (201) into a BSTL slurry (704), and
processing (406) the BSTL slurry (704) into the tea-based beverage precursor (208) by using enzymatic treatment.

2. The method according to claim 1, wherein the enzymatic treatment comprises adding one or more carbohydrases and/or one or more proteases.

3. The method according to claim 1 or 2, wherein the step of processing (406) the BSTL slurry (704) by using the enzymatic treatment (308, 310) comprises reducing a temperature of the BSTL slurry (704) to below 70 °C, performing the enzymatic treatment (308, 310) for a period of time spanning from 60 to 100 minutes, and increasing the temperature of the BSTL slurry (704) to above 80 °C for stopping the enzymatic treatment.

4. The method according to any preceding claim, wherein the method further comprises
removing (408) fibers from the BSTL slurry (704) to form a fiber free BSTL slurry,
wherein the fiber free BSTL slurry has a total solids content in the range of 2 to 4% and a protein content in the range 0.5 to 1.4%,
wherein the fiber free BSTL slurry is processed into the tea-based beverage precursor (208).

5. A tea-based beverage precursor (208) produced according to the method (400) according to any preceding claim.

6. A method (500) for producing a tea-based beverage (706) based on a tea-based beverage precursor, said method comprising
receiving (502) the tea-based beverage precursor (208) produced according to any one of claims 1 to 4,
mixing (504) the tea-based beverage precursor (208) with other ingredients (210) into a BSTL-based mixture (705), and
heat treating (506) the BSTL-based mixture (705) such that the tea-based beverage (706) is formed.

7. The method (500) according to claim 6, wherein the other ingredients comprise sugar, minerals, vitamins, salt, vegetable oils, aroma and/or water.

8. A tea-based beverage (706) produced according to the method (500) according to any one of claims 6 and 7.

9. A method (600) of combined production of tea (103) and a tea-based beverage (706), said method comprising
producing (602) the tea (103) to output the tea (103) and brew spent tea leaves,
producing (612) the tea-based beverage (706) according to the method (500) according to any one of claims 6 and 7.

10. The method (600) according to claim 9, further comprising
obtaining (616) tea cream (206) as a step in the producing (602) of the tea (103), and
using the tea cream (206) as an ingredient in the tea-based beverage (706).

11. The method (600) according to claim 9 or 10, further comprising, subsequent to the step of producing (400) the tea-based beverage precursor (208) and prior to the step of producing (500) the tea-based beverage based on the tea-based beverage precursor (208), and
storing (618), during a storage time period, the tea-based beverage precursor (208) for subsequent use as a base material for production of the tea-based beverage (706), wherein the storage time period exceeds 2 hours.

12. The method (600) according to claim 11, wherein, during the step of storing (618), the tea-based beverage precursor (208) is transported from a tea production site in which a processing line (118) for producing the precursor is placed to a tea-based beverage production site in which a processing line (120) for producing the tea-based beverage is placed.

13. A processing line (118) for producing a tea-based beverage precursor (208), said processing line (118) comprising
a grinder (104) for transforming brew spent tea leaves (BSTL) (201), obtained from a tea extraction system (102) used for tea production, into a BSTL slurry (704), and
an enzymatic treatment station (108) arranged for processing the BSTL slurry (704) into the tea-based beverage precursor (208).
